# EUROPEAN PATENT APPLICATION

(11) **EP 0 665 149 A1**
(43) Date of publication of application: **02.08.1995**
(21) Application number: 95300492.6
(22) Date of filing: 26.01.1995
(51) Int. Cl.: B60T 17/04, B61G 5/06

(54) **A cock**

(30) Priority: 26.01.1994 GB 9401433
(71) Applicant: DAVIES & METCALFE PLC, Stockport, Chesire SK6 3AE (GB)
(72) Inventor: Timperley, David, Romiley, Stockport Sk6 3BY (GB)
(74) Representative: Every, David Aidan

(57) **Abstract**

A cock (3) for an air brake pipe (2) of a railway carriage is operable between open and closed positions to permit pressurised air to flow form inlet (7) to outlet (8). A vent through which air from the inlet is vented when the cock is closed has a seal (22) moveable between sealing and non-sealing positions. The seal (22) has is fastened to a torsion spring (17) restrained by an alloy (29) having a melting or disintegration temperature above a predetermined value. At the predetermined value the alloy (29) melts to release the torsion spring (17) so that the seal (22) is biased to the sealing position to close said vent thereby preventing leakage of air from the end cock and consequential application of the brakes.

## Description

This invention relates to a cock and more particularly to an end cock for a pressurised gas conduit of the kind used, for example, in pneumatic braking systems on railway vehicles.

In conventional pneumatic braking systems on a railway vehicles, if leakage above a predetermined level occurs from a brake pipe the emergency brakes are automatically applied to provide a fail-safe mechanism.

It is increasingly prevalent for railway vehicles or the like to be used in long distance tunnels for example in the Channel Tunnel between France and the United Kingdom and accordingly a different safety criteria must be applied. The prime consideration for safety is that a train should not be allowed to fail in a manner which causes it to stop in a tunnel. This is particularly important when the failure is caused by the effects of a fire. The consequences of a train full of passengers becoming irrecoverably stranded inside a tunnel with the effects of fire, smoke and toxic fumes are obviously unacceptable.

In the event of a fire conventional seals along an air pipe are likely to disintegrate and in the case of the air brake pipe this will result in a leakage of air pressure and consequential application of the brakes. One such seal exists in an end cock which is present, for example, at each end of the air brake pipe on each carriage of a railway vehicle.

It is an object of the present invention provide a cock which has a fire resistant sealing arrangement.

According to the present invention there is provided a cock for a pressurised gas conduit, the cock comprising an inlet and an outlet for the pressurised gas, the cock being operable between open and closed positions, a vent through which air from the inlet is vented when the cock is closed, a first seal associated with said vent, the first seal being moveable between sealing and non-sealing positions and having biasing means restrained by a material having a melting or disintegration temperature of a predetermined value, wherein at said predetermined value the material melts or disintegrates to release said biasing means so that the first seal is biased to the sealing position to close said vent.

Thus in the event of a fire when the predetermined temperature is likely to be reached, the first seal will automatically be moved into an operational position.

Conveniently the biasing means is restrained by being set in said material in the solid phase when the temperature is below said predetermined value.

The first seal may be a shutter moveable by the biasing means when the material has melted or disintegrated and may take the form of an arcuate segment moveable within an annulus defined between a cock housing and a valve seat.

Preferably the vent is a hole formed in the housing and valve seat and there is provided a travel limit slot in said housing, which slot prevents the shutter from being biased beyond the vent hole.

The biasing means and the material in solid phase may be housed in a recess defined at one end of the housing.

Preferably the biasing means is a torsion spring one end of which is upstanding and fixed to said shutter and the other end is fixed to said housing.

An elastomeric second seal may be provided on a valve member which is operable to open and close said cock, and when the cock is in the open position the air is prevented from being vented by said second seal abutting the valve seat, the second seal being perishable at a temperature above said predetermined value so that when it perishes said material has melted or disintegrated to permit the shutter to close the vent.

A specific embodiment of the present invention will now be described, by way of example only, with reference to the accompanying drawings in which:
Figure 1 is a diagrammatic representation of part of an air supply system of a railway vehicle for coupling to an adjacent vehicle;
Figure 2 is a part sectioned side view of part of a cock of the present invention; and
Figure 3 is a part sectioned underside view of part of the cock of figure 2.

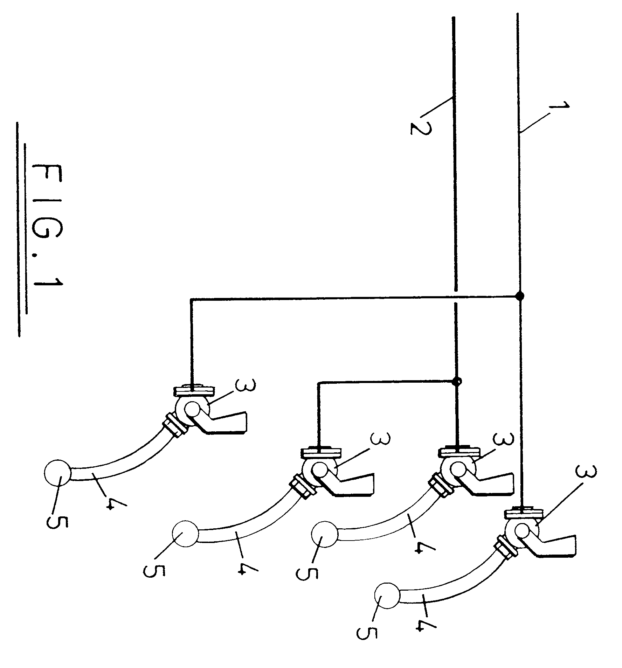

Referring to figure 1 of the drawings, there is shown an arrangement which is present at each end of air supply pipes on a railway vehicle such as a passenger carriage.

Two air supply pipes which run the length of the railway vehicle are shown: a main reservoir pipe 1 and an air brake pipe 2. The main reservoir pipe 1 carries pressurised air from a main reservoir (not shown) to facilities in each carriage e.g. toilet flushes, automatic doors and air conditioning etc. The air brake pipe 2 carries pressurised air to a distributor (not shown) which controls the brake application on each carriage as is well known. At each end of the carriage the air pipes are bi-furcated and each branch pipe has an end cock 3 which connects the pipe to a flexible coupling hose 4. The flexible hose 4 present at each carriage end is connected to a corresponding hose on the adjacent carriage by means of a hose-to-hose coupling comprising mating coupling heads 5 (only one shown in figure 1).

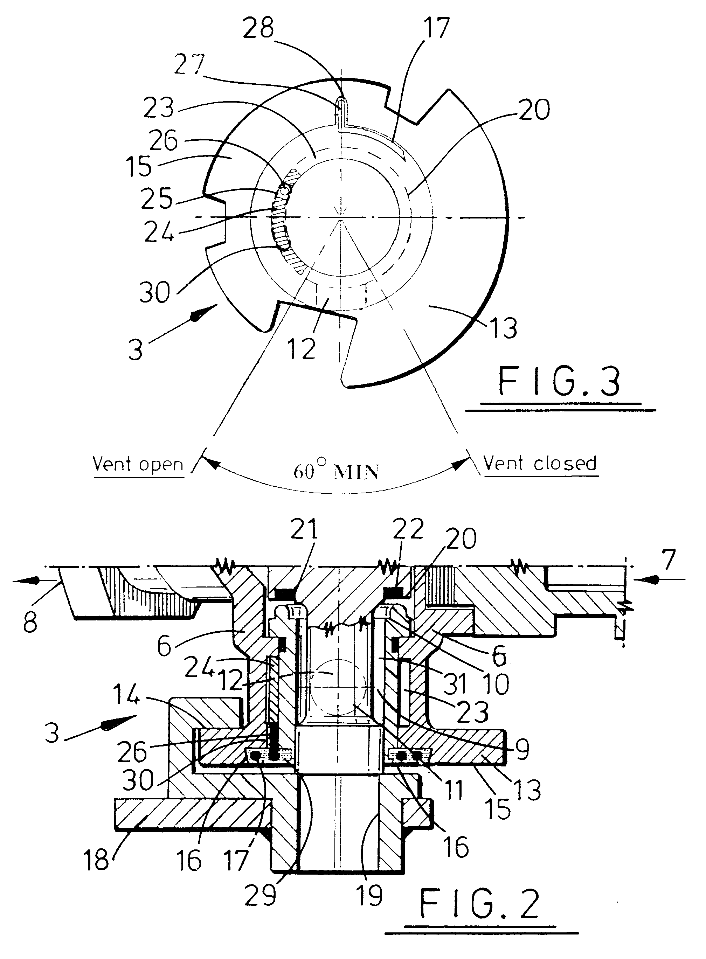

The end cock 3, shown in more detail in figures 2 and 3, is generally of a conventional design well known to those in the field and comprises a main body 6 (shown in part only) with an air inlet 7 connected to the upstream air brake pipe or main reservoir pipe (see figure 1) and air outlet 8 which is connected to a downstream flexible hose 4 and the coupling head 5 (see figure 1). The main body 6 has a depending central bore 9 in which a cylindrical valve seat 10 and central spindle 11 are coaxially received, the spindle 11 protruding from the central bore 9. The main body 6 and the valve seat 10 each have radial apertures which form a vent hole 12.

The free end of a wall of the central bore 9 has a radially outward extending flange 13 having an upper cam surface 14. In the lower surface 15 of the flange 13 and the adjacent coterminous lower end of the valve seat 10 there is formed a recess 16 which houses a torsion spring 17.

An operating lever 18 rides on the cam surface of flange 13 and is rotatable relative to the main body 6. The lever 18 is of conventional design and will not be described in any detail. A central aperture 19 in the lever 18 receives the protruding end of the valve spindle 11. At its upper end the spindle 11 is stepped (indicated at 20) and the surface of the step 20 has a groove 21 in which an elastomeric seal 22 is received. The seal 22 is engageable with an upper surface of the valve seat 10 as is known in conventional end cock designs.

In between the main body 6 and the valve seat 10 there is an annular cavity 23 shown clearly in figure 2 of the drawings. The cavity 23 houses an arcuate segmental shutter 24 which, under normal conditions, is positioned clear of the vent hole 12. The shutter 24 has a slot 25 which receives an upstanding end 26 of the torsion spring 17. The other end 27 of the spring 17 is fixed in a slot 28 of the main body 6. The recess 16 in which the torsion spring 17 is located is filled with an alloy 29 having a melting point below a predetermined temperature so that under normal temperature conditions the alloy 29 is in the solid phase and the spring 17 and therefore the shutter 24 are fixed in position. The main body 6 has an arcuate spring clearance slot 30 located below the shutter 24 in which the upstanding end 26 of the spring 17 can run during movement of the shutter 24. In the absence of the alloy 29 or when it is in the liquid phase, the spring 17 is able to exert a biasing force to rotate the shutter 24 in the annular cavity 23 about the longitudinal axis of the central bore 9 towards the vent hole 12.

On assembly, the shutter 24 is pushed back against the force of the spring 17 so that the vent hole 12 is open and the alloy 29 is then poured in liquid phase into the recess 16. Once the alloy 29 has solidified the shutter 24 is released and is set in the open position (see VENT OPEN position in figure 3).

In normal operation when the lever 18 is turned it rides over the cam surface 14 to impart both axial and rotational movement to the valve spindle 11 to open or close the cock 3. When the lever 18 is rotated to close the end cock 3 (i.e. the pressurised air is prevented from passing form inlet to outlet) the valve spindle 11 is raised from the valve seat 10 to permit downstream air to be vented through the vent hole 12 by passing between the seal 22 and the upper surface of seat 10 and down through an annular gap 31 defined between the spindle 11 and the seat 10. If the lever 18 is turned to open the end cock 3 the spindle 11 is lowered so that the seal 22 abuts valve seat 10 and venting of the downstream air is prevented.

In the event of a fire the seal 22 disintegrates and the downstream air is free to pass down towards vent hole 12. However, the predetermined temperature will already have been reached and the alloy 29 will have melted or disintegrated to free torsion spring 17 to bias the shutter 24 towards the vent hole 12 until the upstanding end 26 of the spring 17 abuts the end of the clearance slot 30 (see VENT CLOSED position in figure 3). In this position the shutter 24 covers the vent hole 12 thereby preventing significant air leakage and consequential application of the brakes. Typically the shutter moves through a minimum of 60 degrees between the vent open and vent closed positions.

The shutter mechanism acts so that the level of pressure leakage is kept down to a rate whereby the combined leakage from the four individual end cocks on each carriage end is still substantially less than the air pressure being supplied to the air pipe. Prevention of brake application allows the railway vehicle or the like to be recovered from the tunnel.

The end cock 3 can also be used on the main reservoir pipe 1 (see figure 1) and the prevention of significant leakage in the event of a fire will allow the facilities to remain in working operation.

## Claims

1. A cock for a pressurised gas conduit, the cock comprising an inlet and an outlet for the pressurised gas, the cock being operable between open and closed positions, a vent through which air from the inlet is vented when the cock is closed, a first seal associated with said vent, the first seal being moveable between sealing and non-sealing positions and having biasing means restrained by a material having a melting or disintegration temperature of a predetermined value, wherein at said predetermined value the material melts or disintegrates to release said biasing means so that the first seal is biased to the sealing position to close said vent.

2. A cock according to claim 1, wherein the biasing means is restrained by being set in said material in the solid phase when the temperature is below said predetermined value.

3. A cock according to claim 1 or 2, wherein the first seal is a shutter moveable by the biasing means when the material has melted or disintegrated.

4. A cock according to claim 3, wherein the shutter is an arcuate segment and is moveable within an annulus defined between a cock housing and a valve seat.

5. A cock according to claim 4, wherein the vent is a hole formed in the housing and valve seat.

6. A cock according to claim 5, wherein there is provided a travel limit slot in said housing, which slot prevents the shutter from being biased beyond the vent hole.

7. A cock according to any one of claims 4 to 6, wherein the biasing means and the material in solid phase are housed in a recess defined at one end of the housing.

8. A cock according to any one of claims 4 to 7, wherein the biasing means is a torsion spring.

9. A cock according to claim 8, wherein one end of the torsion spring is upstanding and fixed to said shutter and the other end is fixed to said housing.

10. A cock according to claim 9, wherein the upstanding end of the torsion spring is received in said travel limit slot and prevents the spring moving beyond a position whereby the shutter is beyond the vent hole.

11. A cock according to any one of claims 4 to 9, wherein an elastomeric second seal is provided on a valve member which is operable to open and close said cock, and when the cock is in the open position the air is prevented from being vented by said second seal abutting the valve seat, the second seal being perishable at a temperature above said predetermined value so that when it perishes said material has melted or disintegrated to permit the shutter to close the vent.

12. A cock substantially as hereinbefore described with reference to the accompanying drawings.
